# EUROPEAN PATENT SPECIFICATION

(11) **EP 4 797 618 B1**
(45) Date of publication and mention of the grant of the patent: **18.11.2026**
(21) Application number: 25178653.9
(22) Date of filing: 23.05.2025
(51) Int. Cl.: H04L 9/40, G06F 21/55, H04L 43/045

(54) **COMPUTER-IMPLEMENTED METHOD FOR MONITORING A COMPUTER SYSTEM FOR ACCOUNT AND/OR SESSION SECURITY ATTACKS, AND COMPUTER SYSTEM THEREOF**
COMPUTERIMPLEMENTIERTES VERFAHREN ZUR ÜBERWACHUNG EINES COMPUTERSYSTEMS AUF KONTO- UND/ODER SITZUNGSSICHERHEITSANGRIFFE UND COMPUTERSYSTEM DAFÜR
PROCÉDÉ MIS EN OEUVRE PAR ORDINATEUR POUR SURVEILLER UN SYSTÈME INFORMATIQUE POUR DES ATTAQUES DE SÉCURITÉ DE COMPTE ET/OU DE SESSION, ET SYSTÈME INFORMATIQUE ASSOCIÉ

(30) Priority: 19.02.2025 PT 2025120055
(43) Date of publication of application: 26.08.2026
(73) Proprietor: Feedzai - Consultadoria e Inovação Tecnológica, S.A., 3030-199 Coimbra (PT)
(72) Inventor: BERNARDO NARCISO, João, 3030-199 Coimbra (PT); EVANGELHO FELICIANO, Beatriz, 3030-199 Coimbra (PT); MARQUES COSTA, Rita, 3030-199 Coimbra (PT); SANTOS RODRIGUES BIZARRO, Pedro Gustavo, 3030-199 Coimbra (PT)
(74) Representative: Patentree

(56) References cited:
- US-A1- 2019 166 145
- US-A1- 2020 021 607
- NGUYEN PHONG H ET AL: "VASABI: Hierarchical User Profiles for Interactive Visual User Behaviour Analytics", IEEE TRANSACTIONS ON VISUALIZATION AND COMPUTER GRAPHICS, IEEE, USA, vol. 26, no. 1, 1 January 2020 (2020-01-01), pages 77 - 86, XP011752704, ISSN: 1077-2626, [retrieved on 20191122], DOI: 10.1109/TVCG.2019.2934609
- YANG SHI ET AL: "Visual Analytics of Anomalous User Behaviors: A Survey", IEEE TRANSACTIONS ON BIG DATA, vol. 8, no. 2, 1 January 2020 (2020-01-01), pages 377 - 396, XP055661629, DOI: 10.1109/TBDATA.2020.2964169

## Description

### TECHNICAL FIELD

The present disclosure relates to a computer-implemented method for providing an interactive user interface for monitoring a computer system for account take-over, and computer system thereof.

### BACKGROUND

Institutions from various societal fields (e.g., industrial, logistic, financial, etc.) face the challenge of identifying suspicious and/or outlier activity, namely abnormal user behaviour, unexpected patterns in industrial manufacturing lines and respective machines, etc. However, existing tools often lack the ability to seamlessly integrate multiple dimensions of digital activity into a single, interactive visualisation, leading to increased cognitive load and preventing respective field experts from quickly spotting anomalies in varying sources of information.

When using computer, phones, smartwatches Human-Machine Interfaces (HMI) or any other form of digital interaction to validate manufacturing operations in industrial machines, to make financial transactions, or to perform product stock changes, a register is logged on digital platforms that display amounts of data, i.e., a digital footprint that indicates habits usual behaviours and normal functioning of people, institutions and companies, herein referred to as users. A change in those might indicate abnormal activity. For that reason, digital activity is one important dimension, among others, that field experts look into in the context of outlier/predetermined pattern detection. One key aspect of digital interactions is a session, which represents a continuous period of user activity on an online platform. Sessions help track normal user behaviour and can be analysed for anomalies, as outlier/predetermined pattern activity often involves deviations from established patterns [SLT*20]. Detecting anomalous behaviour is therefore essential for identifying outlier incidents such as the ones previously exemplified, which are often preceded by behaviour that deviates from what was seen in the past [LGS*22]. Suspicious activity can include unusual login attempts from new devices or locations, uncommon insertion of new G-Code commands, unexpected machine actuator behaviour, sudden changes in transaction or product output frequency, modifications to account details such as email or phone number, or high-velocity interactions in financial, industrial or logistic online platforms [SLT*20]. While each of these actions alone may not be inherently indicative of being outlier/predetermined pattern instances, their combination might indicate abnormal behaviour.

Uncovering the combinations, sequences and patterns in data that might indicate outlier instances is the main task of experts when it comes to their sectorial activity, a task of renewed importance. For instance, data from the Financial Trade Commission (FTC) shows that fraud and identity theft has been growing continuously since the beginning of the millennium, costing U.S. costumers over $10 billion in 2023. Furthermore, abnormal instances in digital activity-related crimes such as account takeovers (ATO) are among the most common types of financial crime and continue to grow [Fed24] - an ATO is a form of online identity theft where a fraudster gains unauthorized access to an individual's account within a given system [KDC*19]. However, existing tools often lack the ability to seamlessly integrate multiple dimensions of digital activity into a single, interactive visualisation. This fragmentation forces analysts and experts to manually cross-reference different data sources, increasing cognitive load and slowing down outlier detection efforts.

Several visualisations have been developed to analyse anomalous user behaviours across diverse domains, offering insights into complex digital interactions [SLT*20]. TargetVue [CSL*16] provides a method to examine irregular communication patterns, while VASABI [NHC*20] uses hierarchical representations to summarize user activity at multiple levels. MOOCad [MXC*19] reveals irregular patterns in large-scale learning sequence data with integration of temporal and categorical information. Additionally, #FluxFlow [ZCW*14] displays dynamic visualisations that can capture abrupt changes in information spreading.

Focusing on outlier detection, research demonstrates that inter-active dashboards and visual analytic tools significantly reduce the cognitive effort required to detect anomalies, helping analysts to quickly identify suspicious patterns in sectorial environments. Different studies have devised visual systems that not only highlight unusual activity but also integrate interactive features - such as tooltips, dynamic filtering, and the visualisation of multiple datasets at once - to enhance investigative processes [SMPM21, CLG*08, ZWW*23, FVS*23, FCA*24].

There has been considerable progress in integrating and summarising data from heterogeneous sources. Outlier analysis often requires the consolidation of session logs, device identifiers, account modifications, and historical outlier records into a single, coherent overview. Researchers have proposed methods for aggregating and synchronizing diverse data streams, ensuring that key signals - particularly those indicating shifts in user behaviour prior to the presence of outliers - are preserved for analysis. This holistic approach enables analysts to not only detect anomalies more effectively but also contextualize them within broader patterns of activity [AAS23, NSH*18].

A strategy for visualising time-sensitive data involves the use of timelines and heatmaps. Cloud-Lines [KBK11] is such an example of how visualisations can highlight temporal patterns across multiple time-series, providing a compact overview of event sequences. Heatmaps can draw attention to periods with unusually high activity, and interactive timelines allow for a detailed exploration of events within specific intervals [PMC*22]. Recent work incorporates additional layers of context, providing a view of temporal data [DXC*24, BBC*24].

Document NGUYEN PHONG H ET AL: "VASABI: Hierarchical User Profiles for Interactive Visual User Behaviour Analytics", IEEE TRANSACTIONS ON VISUALIZATION AND COMPUTER GRAPHICS, IEEE, USA, vol. 26, no. 1, 1 January 2020 (2020-01-01), pages 77-86, XP011752704 [NHC*20], for which the preamble of claim 1 relates, discloses displaying multidimensional security data for allowing an analyst to identify security attacks. The disclosed document presents a visual analytics approach to help analysts gain a comprehensive understanding of user behaviour at multiple levels, namely individual and group level. The disclosed document describes a user-centred approach to design a visual analytics framework supporting the analysis of collections of users and the numerous sessions of activities they conduct within digital applications. The framework of the disclosed document is centred around the concept of hierarchical user profiles that are built based on features derived from sessions, as well as on user tasks extracted using a topic modelling approach to summarise and stratify user behaviour.

Document US 2020/0021607 A1 discloses a method for detecting similarities between users or devices and/or detecting deviations in an entity's activity from a behavioural baseline for detection of an account takeover situation. The disclosed document describes a security platform that employs a variety techniques and mechanisms to detect security related anomalies and threats in a computer network environment. The disclosed security platform is "big data" driven and employs machine learning to perform security analytics. The security platform of the disclosed document performs user/entity behavioural analytics (UEBA) to detect the security related anomalies and threats, regardless of whether such anomalies/threats were previously known.

Document US 2019/0166145 A1 describes a method comprising selecting network security event investigation timelines in a workflow environment. Techniques and mechanisms are disclosed in document US 2019/0166145 A1 that enable network security analysts and other users to efficiently conduct network security investigations and to produce useful representations of investigation results. The disclosed document describes a network security investigation that generally refers to an analysis by an analyst (or team of analysts) of one or more detected network events that may pose internal and/or external threats to a computer network under management.

Document YANG SHI ET AL: "Visual Analytics of Anomalous User Behaviors: A Survey", IEEE TRANSACTIONS ON BIG DATA, vol. 8, no. 2, 1 January 2020 (2020-01-01), pages 377-396, XP055661629 discloses the use of heat maps for visualizing and identifying anomalous user behaviours, e.g. anomalous travel patterns, network communications or transactions, e.g. by demonstrating spatial densities of humans and vehicles.

While the referenced works of prior art are useful, they do not fully address the specific requirements to meet in the context of digital activity for outlier detection.

These facts are disclosed in order to illustrate the technical problem addressed by the present disclosure.

### GENERAL DESCRIPTION

The present disclosure relates to an interactive visualization user interface of multidimensional security and outlier data/predetermined patterns, namely for account takeover detection, according to the present invention which is characterised by the features recited in the characterising part of claim 1.

The present disclosure surprisingly solves the problem of detecting account takeovers by integrating multidimensional security data-such as session logs, device characteristics, and account state changes-into a unified, interactive visual interface.

Unlike prior art systems that display isolated data views, the present solution introduces stacked timelines with heatmap encodings that enable the user to intuitively identify temporal patterns and anomalous behaviors across multiple dimensions, thereby supporting a technically improved detection workflow.

Heatmap may be defined as a chart where data is mapped in cells arranged along zero, one or more dimensions, where each cell's color intensity (or brightness intensity in the case of a monocolor heatmap) represents a scalar value. The dimension or dimensions may, for example, represent time, category, user, etc. If the dimension is null, there is only one cell. When integrated into a broader two-dimensional heatmap chart, one-dimensional heatmaps may be used as contextual strips that enrich 2D data views, rather than a full 2D grid, especially when providing per-row or per-column summaries.

The present disclosure relates to, a visual analytics tool aimed at improving the detection of abnormal patterns in digital platforms displaying certain amounts of data, particularly in the dimensions tied with digital activity. The system combines several stacked timelines to offer an overview of multiple activity dimensions, integrating online data from various sources (transactions, products, operations etc.), device and/or machine identifiers, transactional activities, and account information. The interface is validated with a think-aloud experiment where the ability of said platform to provide intuitive insights and enhance understanding is emphasised.

The prior art shows that the approach in the present disclosure consolidates log data, device information, account information modifications, and outlier history into a unified visualisation to support efficient outlier/predetermined pattern detection. The disclosure proposes a way to integrate, in the visualisation, different sets of data without the need to jump through different sources. The most significant advance in comparison with the prior art is that this integration is done by stacking multiple time-lines, with variable granularity, which enables the exploration and comparison of different kinds of data. Furthermore, a preferential embodiment leverages the power of heatmaps to high-light temporal patterns and spikes, directing the user to the suspicious activities that require attention, potentially uncovering the presence of outliers. The present disclosure offers a comprehensive approach to outlier/predetermined pattern detection in digital user behaviour by evaluating all key aspects of the behaviour of users, devices and/or machines simultaneously, providing a holistic view, reducing cognitive load and enabling analysts to quickly identify anomalies with greater ease and accuracy.

The present disclosure relates to a visualisation tool designed to support outlier/predetermined pattern detection by offering a comprehensive and interactive overview of digital activity data. By integrating device and/or session logins, device identifiers, transactional and/or operational activity and account, device and/or machine data information, the tool enables analysts and experts to easily track and investigate patterns that may signify abnormal behaviour and the presence of outliers/predetermined patterns. The interface allows for the dynamic analysis of multiple data dimensions and supports varying time windows, helping analysts in identifying novel devices, detecting changes in behaviour, and correlating digital activity with outlier data.

The present disclosure makes at least two key contributions. First, it introduces a tool designed to enhance the analytical capabilities of outlier/predetermined pattern detection teams by providing an intuitive interface for detailed, multi-dimensional analysis of digital activity data. Second, it identifies key requirements for analysts when reviewing digital activity data, based on our research and interviews with analysts.

The present disclosure relates to a computer-implemented method for monitoring a computer system for account and/or session security attacks, wherein the computer system provides session logins to a plurality of user devices using a plurality of user accounts, wherein the method comprises:
displaying multidimensional security data from said computer system, said multidimensional security data comprising a plurality of dimensions comprising a time dimension, wherein the time dimension is partitioned in time units;
displaying a plurality of device heatmaps for each time unit, wherein each device heatmap corresponds to a device characteristic of the user devices, wherein each device heatmap is encoded as a function of the number of session logins for each device characteristic;
displaying a plurality of account heatmaps for each time unit, wherein each account heatmap corresponds to a characteristic of the user accounts, wherein each account heatmap is encoded as a function of a change occurring, or not, to one characteristic of the one or more user accounts of a plurality of user accounts, i.e., a heatmap may thus encode two or more states.

In an embodiment, each account heatmap is encoded as a function of a change occurring, or not, to one characteristic of the one or more user accounts and also encoded as a function of the one characteristic of the one or more user accounts having been marked as restricted. A restricted account is an account that has some limiting characteristic attributed to it, such as being in a blocked list, being in a black-list, marked as suspended, among others.

In an embodiment, said heatmaps for a same time unit are stacked perpendicularly to the time dimension.

In an embodiment, the method further comprises displaying a time window selector, receiving user interaction from said time window selector and updating displayed heatmaps with the selected time window, e.g. the selection of a time period of 3 months, of 1 month or of 1 week in the time window selector may adjust each time unit to a 1 day time period, and the selection of a time period of 24 hours in the time window selector may adjust each time unit to a 1 hour time period in particular the time window selector includes an adjustable time dimension granularity for example, a choice of time dimension unit, further in particular an automatically adjustable time dimension granularity as a function of the selected time window, further in particular automatically adjustable time dimension granularity as a function of the selected time window duration.

In an embodiment, the method further comprises displaying a horizontal bar chart aligned with time dimension, displaying a session amount per time dimension unit, wherein a session amount can be a transactional amount occurred during each time unit partition of said time dimension.

In an embodiment, the method further comprises displaying said plurality of device heatmaps arranged parallel to the time dimension, each device heatmap aligned with a time dimension unit, displaying number of logins for all the user devices.

In an embodiment, the method further comprises detecting a user hover point over any part of a time unit partition and high-lighting the hovered time unit partition.

In an embodiment, the method further comprises detecting a user hover point over any part of a time unit partition and displaying a hovering pop-up comprising data about the hovered time unit partition.

In an embodiment, the method further comprises an aggregated device heatmap, wherein the aggregated device heatmap is encoded as a function of the number of session logins for a plurality of device characteristics, wherein the plurality of device characteristics is an aggregation of each device characteristic for each of the plurality of device heatmaps.

In an embodiment, the method further comprises an aggregated account heatmap, wherein the aggregated account heatmap is encoded as a function of an aggregation of characteristics of the user accounts, wherein the aggregated account heatmap is encoded as a function of a change occurring, or not, to one or more characteristics of the user accounts. A heatmap may thus encode two or more states, and the aggregation of characteristics of the user accounts comprises one or more characteristics of the user accounts.

In an embodiment, the characteristics of the user accounts are account events of the user accounts, in particular, a change to an e-mail, a change to a phone number, a change to an address and/or a change to a password; and/or the device characteristics comprise a device identifier, an operating system identifier, a device model and/or a browser identifier.

In an embodiment, the method further comprises displaying an indicator representing an added device, wherein the indicator is placed perpendicularly to the time dimension and adjacent to the device heatmap for a time unit where the device has been added.

In an embodiment, the method comprises detecting a user input, in particular a user click, at one time unit of one heatmap and, if detected, highlighting the heatmaps of the corresponding time unit.

In an embodiment, the method comprises detecting a user hover point over any of the highlighted time unit heatmaps and, if detected, displaying a hovering pop-up comprising data about the hovered time unit; in particular comprising detecting a user hover point over any of the highlighted time unit heatmaps of a device characteristic heatmap and, if detected, displaying a hovering pop-up comprising a labelled value for the corresponding hovered device characteristic.

In an embodiment, the method comprises detecting a user input, in particular a user click, on a device characteristic heatmap and, if detected, copying an identifier of the device corresponding to said device characteristic to a temporary storage clipboard of the interactive user interface.

In an embodiment, receiving a user scroll input vertically moves the interactive user interface, in particular wherein receiving a user scroll input when hovering the plurality of device heatmaps, moves vertically the plurality of device heatmaps.

It is also disclosed a non-transitory computer-readable medium comprising computer program instructions for implementing a method for providing a user interface for monitoring a computer system for account take-over, which when executed by a computer processor, cause the processor to carry out any of the disclosed methods.

It is also disclosed a computer system for providing a user interface for monitoring a computer system for account take-over, wherein the computer system provides session logins to a plurality of user devices using a plurality of user accounts, arranged for carrying out any of the disclosed methods.

### BRIEF DESCRIPTION OF THE DRAWINGS

The following figures provide preferred embodiments for illustrating the disclosure and should not be seen as limiting the scope of invention.
**Figure 1****:** Representation of an interface for visualizing session and account related datasets, depicting an embodiment for a scenario of a client account takeover (ATO) by fraudsters after the introduction of a new device.
**Figure 2****:** Detail of a hover on a device timeline triggering a tooltip with additional information.

### DETAILED DESCRIPTION

The present disclosure relates to a computer-implemented method for providing an interactive user interface for monitoring a computer system for account take-over, and computer system thereof.

The present disclosure relates to an interactive visualization user interface of multidimensional security and outlier/predetermined pattern data, namely for account takeover detection.

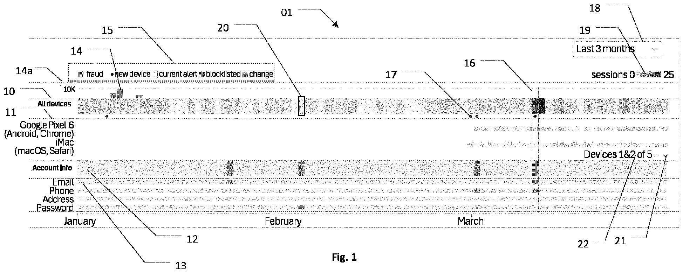

**Figure 1** represents an interface, **01,** for visualizing account and session related datasets, depicting an embodiment for a scenario of a client account takeover (ATO) by fraudsters after the introduction of a new device. The central elements of the visualisation are the heatmaps that display the overall information timeline from all devices, **10,** and data for each specific device, **11.** This information is enriched by account information, **12,** that signals changes in email, phone, password, and address in smaller bars below, **13.** The interface is topped by a bar chart that represents the historical fraud for that person, **14,** and a header with a legend and time window selector, **15.**

Heatmap may be defined as a chart where data is mapped in cells arranged along zero, one or more dimensions, where each cell's color intensity (or brightness intensity in the case of a monocolor heatmap) represents a scalar value. The dimension or dimensions may, for example, represent time, category, user, etc. If the dimension is null, there is only one cell. When integrated into a broader two-dimensional heatmap chart, one-dimensional heatmaps may be used as contextual strips that enrich 2D data views, rather than a full 2D grid, especially when providing per-row or per-column summaries.

The following pertains to design requirements. Analysts rely on digital activity data to detect abnormal behaviour and assess the detection of outliers. Their workflow involves reviewing session login details, device identifiers (e.g., model name, operating system, etc.), and account identifiers (e.g., addresses, emails, phone numbers, passwords, etc.). They focus on identifying deviations in user behaviour, such as previously unseen devices, blocklisted phone numbers or email accounts, in other words, previously flagged as outliers by analysts, and unusual changes in activity frequency like login spikes.

In an embodiment and given time constraints found in various sectors [SMPM21], analysts typically review only a recent time period of data, e.g., data from the past three months, but may adjust the time window for broader trends (e.g., daily summaries) or more granular insights (e.g., hourly breakdowns). Furthermore, they perform multi-factor analysis, integrating both sectorial and digital activities, as outlier behaviour often precedes the occurrence of the damaging or lethal outlier event [LGZ*20]. From these observations, a set of design requirements is derived to support analysts' workflows effectively.

In an embodiment, the interface must display comprehensive information for all device information and usage, and account information changes, providing an overview of user and/or machine activity. Moreover, the interface enables the identification of novel devices, highlighting when these were introduced and used. The interface allows a user of said interface to detect changes in behaviour frequency, by comparing them against average activity. In an embodiment, the interface integrates sectorial event data history (e.g., transactional events, manufacturing events, etc.) to support correlation analysis with digital activities. In an embodiment, the interface supports variable time windows to accommodate different analytical needs, and facilitates the analysis of changes across multiple digital data dimensions simultaneously. In an embodiment, the interface can be integrated with other software that can enable outlier detection.

The following pertains to the Interface. In an embodiment, the interface is composed of five sections, providing a complete overview for the different types of digital activity data, as shown in **Figure 1****:** the header section, **15,;** the fraud bar chart, **14 ;** the information timeline for all devices and/or machines, **10,** and for each specific device and/or machine, **11;** and the account information timeline for an account, **12,** as well as for one or more attributes of said account, **13.** There is also a vertical current alert indicator, **16,** that indicates the time block that raised the alert the analyst should review, intercepting sections **10, 11, 12, 13** and **14.**

The following pertains to the header of the interface. In an embodiment, the header of the element is composed by two parts. Firstly, a legend, **15,** that provides details on the various shapes and colour encodings, including the heatmap's colour range, **19,** represented by the number of sessions, making sure that tool's insights are understood with ease. Secondly, a time window selector, **18,** that allows the interface users to adjust the time window, **01,** for their analysis, offering flexibility based on the needs of the investigation. The period of time of said time windows, **01,** can be set from the selector, **18,** to pre-defined ranges, such as 24 hours, seven days, one month, and three months, enabling analysts to explore patterns and anomalies across varying time ranges. The granularity of the visualisation time blocks, **20,** depends on the selected time window: one hour for the 24-hour time window, and one day for the remaining time periods.

The following pertains to an amount indicator in the interface for outlier detection. In an embodiment the amount indicator section, **14,** is composed of a bar chart that sits on top of the session summary timeline, **10.** Each bar represents the sum amount identified as outlier amount (e.g., fraud) for the respective time block, **20.** It also includes a label, **14A,** with the maximum amount of the chart.

The following pertains to the Device Information display on the interface. In an embodiment, the device information section, **10** and **11,** is composed of several horizontal timelines. The first element is the summary timeline for all relevant devices, **10,** and it is a heatmap visualisation of number of logins for all devices where each time block, **20,** is represented by a rectangle. The heatmap sequential colour scale goes from light grey, representing a time window with zero login sessions, to a darker shade, representing a time block with the most login sessions of the selected time window. When hovered, a tooltip appears with the number of sessions for the respective time block, amount of fraud, and characteristics of the device(s) added, if any.

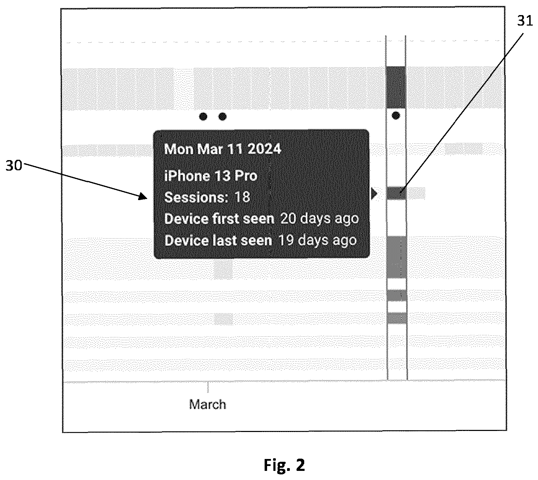

**Figure 2** presents a detail of a hover on a device timeline, **11,** triggering a tooltip with additional information, **30,** and highlighting the blocks of that single day, allowing for cross inspection of different data for the same period.

In an embodiment, beneath the summary information for all devices, **10,** there is a set of stacked heatmaps, which correspond to the timelines of each device, **11.** There is one heatmap bar for each device with its respective activity for the time window selected in the selector, **18.** These follow the same colour scale as the main heatmap. When a block, **31,** is hovered, a tooltip displays the device characteristics, **30,** such as number of sessions for that device and when the device was first and last seen, as displayed in **Figure 2****.** Each timeline is named after the correspondent device's characteristics. When the name is clicked, the unique ID of the device is copied to the clipboard of the user of the interface, allowing for further investigation in any outlier analysis software. To keep a fixed height, a maximum of two device timelines, ordered from the most recent, can appear at the same time. To navigate between timelines, the user can either scroll or use the navigation buttons, **21,** on the bottom right corner of this section. Next to the buttons is a text indicating the index of the devices currently visible and the total number of devices, **22.** Below each rectangle, **20,** of the summary timeline for all relevant devices, **10,** there may be a circle, **17,** indicating that a new device was introduced during that period. That circle can be clicked, resulting in the display of the respective device timeline without the analyst having to manually navigate through the rest of the timelines.

The following pertains to the account information of the interface. In an embodiment, the account information section, **12** and **13,** is also composed of several horizontal timelines. Like in the main device information timeline, **10,** this area includes a main timeline that aggregates all data, **12,** and several more detailed ones, **13.** The account information summary timeline, **12,** is coloured by rectangles that present the time blocks, **20,** in which an account data change occurred. These rectangles, **20,** can be either blue or yellow, representing an account data change or an account data change to a blocklisted mean, respectively. The account information specific timelines, **13,** following the same colour encoding, expands the information of the summary timeline, **12,** representing changes for each of the account information considered: email, phone number, password, and home address. When a block is hovered, a tooltip displays the previous and the new account data (does not apply to passwords).

The following pertains to the usability of the interface by experts. In an embodiment that helps to evaluate the effectiveness and usability of the disclosed interface in real-world scenarios, a user study was conducted with two outlier detection analysts from sectorial fields. Each session lasted approximately 40 minutes and was divided into two phases: an initial free exploration phase and a task-based evaluation.

During the aforementioned free exploration phase, the analysts were given unrestricted time to navigate the interface and familiarise themselves with its interactive features, while employing the think-aloud protocol [vSBS94] to verbalize their thought processes. This approach yielded their immediate impressions and reasoning strategies. With minimal input from any other person, the analysts understood what all elements in the visualisation represented by resorting to the legend, **15,** and the bar code, **19.** After this exploratory phase, the analysts were given a specific task aimed at identifying potential outlier related behaviour in the digital activities of a given scenario.

In the second phase, the task was for the analysts to identify every aspect of the registered behaviour that might be considered suspicious or showing signs of outlier occurrence, and was based on a scenario created with synthetic data that mimics an ATO scenario, such as the one of **Figure 1****.** Using the disclosed interface, the analysts begin by examining the summary of sessions, **10.** This summary presents a heatmap that is especially dense in a region consisting of two days. With that, the analysts instantly recognized a surge in activity during that particular period. The first day of that period coincides with the current alert indicator, **16,** which means that the outlier detection system flagged that event for review. Hovering over this section, the analysts resorted to the tooltip feature for detailed insights, **30,** confirming a spike in logins. By looking into the new device indicator, the analysts correlate the spike of logins with the introduction of a new device. This correlation is confirmed with the device specific timeline, **11.** Further investigation using the account information timelines unveils that, during this peak period, there was a change in the registered email to one previously flagged as blocklisted, **13.** The analysts also successfully identified previous outlier instances in the history that do not seem to be related with the current suspicious activity, because it happened prior to the introduction of the suspicious device and was associated with another device that seems to be often used. In conclusion, experts successfully identified all signs of outlier occurrence and validated the scenario characterizing it as realistic.

After the exploration and task completion, the experts praised the ability to quickly identify suspicious activities, such as spikes in logins and the emergence of new devices, and the ability to combine in one visualisation data from multiple sources.

Moreover, in an embodiment, the integration of multiple data dimensions, such as account changes and device usage patterns, was highlighted as particularly beneficial. This feature assists analysts not only in identifying potential outlier-related behaviour but also in understanding the context of such behaviour, making the tool highly effective in supporting comprehensive investigations.

Another highlight concerns the user interface, **01,** in a general sense, which was complimented for its capability to present complex data in an intuitive manner. The interactive elements, such as clickable indicators that directly link to relevant device timelines, **11,** were appreciated for enhancing the exploratory experience, allowing users to delve deeper into specific devices with ease. While the over-all feedback was very positive, the experts did provide constructive suggestions that could further optimize the user experience. Namely, simplifying or removing the account information summary timeline, **10,** to reduce redundancy could help in maintaining the visualisation's effectiveness without overwhelming the user of the interface; and having the ability to visualize a bigger number of selected devices at the same time could also help in comparison tasks.

Experts have validated the usefulness of the disclosed interface in supporting anomaly detection in investigative workflows, confirming its potential to improve analysts' ability to identify and respond to suspicious activities.

In an embodiment, replacing synthetic data with real datasets may provide a more accurate assessment of its practical utility. Moreover, introducing a custom time selector, rather than relying on predefined time periods, may allow for a more flexible analysis.

In conclusion, the present disclosure relates to an approach to outlier detection by integrating and visualizing multiple dimensions of digital activity data in an interactive interface. By enabling analysts to quickly identify suspicious patterns, correlate digital behaviours with potential outlier occurrence, and streamline investigative workflows, the tool enhances analytical capabilities of outlier detection teams. Experts feedback has validated its usefulness. Ultimately, a key contribution lies in the ability of the disclosed interface to combine multiple data sources - session activity, device information, account changes, and amount history - into a unified visualisation tailored for outlier/predetermined pattern analysis.

It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order.

It is to be appreciated that certain embodiments of the disclosure as described herein may be incorporated as code (e.g., a software algorithm or program) residing in firmware and/or on non-transitory computer useable and readable medium having control logic for enabling execution on a computer system having a hardware-based computer processor, such as any of the servers described herein. Such a computer system typically includes memory storage configured to provide output from execution of the code which configures the hardware-based computer processor in accordance with the execution. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

A hardware-based computer processor, as used herein, also described as a hardware-based computer data processor, refers to any system, device, or apparatus capable of processing data in accordance with the methods described in this disclosure. The hardware-based computer data processor may include one or more hardware-based processors, such as a central processing unit (CPU), a graphics processing unit (GPU), a digital signal processor (DSP), or any combination thereof. These hardware-based processors may be implemented as a single chip, a multi-core processor, a distributed computing system, or any other suitable configuration. For example, this can be a central processing unit (CPU), such as an Intel^{®} Core^{™} i7 processor, and memory modules, including 16 GB of DDR4 RAM. The system may include a solid-state drive (SSD) for storage, an optional GPU (e.g., NVIDIA^{®} GeForce RTX^{™} 3060), and runs a standard operating system, such as Microsoft^{®} Windows^{®} or Linux^{®}. For example, this can be an embedded system utilizing a microcontroller, such as the ARM^{®} Cortex^{®}-M4 processor, with onboard memory (e.g., 1 MB of flash storage and 256 KB of SRAM). This system operates with real-time operating system (RTOS) software and can be integrated into an industrial device. For example, this can also be a cloud-based virtual machine hosted on a server infrastructure, such as an Amazon Web Services (AWS) EC2 instance, featuring virtual CPUs (vCPUs) based on Intel^{®} Xeon^{®} or AMD EPYC^{™} processors. The instance can be configured for example with 32 GB of RAM, 1 TB of elastic block storage (EBS), and executes server-side software designed to perform the computational processes disclosed in this specification.

The hardware-based computer processor may further include memory (e.g., random access memory (RAM), read-only memory (ROM), flash memory, or other suitable storage devices) for storing instructions and data. The hardware-based computer executes instructions stored in memory to perform the functions described in this specification. The instructions may be implemented in any programming language, including but not limited to assembly language, C, C++, Python, or Java.

The hardware-based computer processor may communicate with input/output devices (e.g., a keyboard, mouse, touchscreen, or display), peripheral devices, or external systems via wired or wireless connections, such as USB, Bluetooth^{®}, Wi-Fi^{®}, or Ethernet. The hardware-based computer processor may also be integrated with or connected to a network, including a local area network (LAN), wide area network (WAN), or the internet, to receive and transmit data.

The present disclosure is also particularly apt for execution on a GPU - graphics processing unit (a specialized processor explicitly designed for executing graphical algorithms), NPU - neural processing unit (a specialized processor explicitly designed for executing machine learning algorithms), or any other inherently parallel processing unit. For example, models were run on a Linux PC with Intel Xeon CPU cores and a NVIDIA GeForce RTX.

The present disclosure further facilitates efficient implementation on parallel or artificial neuronal network specialized hardware architectures, including but not limited to Graphics Processing Units (GPUs), Neural Processing Units (NPUs), and other inherently parallel processing units. GPUs, characterized by a plurality of cores optimized for parallel execution of graphical or matrix-based computations, and NPUs, specifically tailored for the accelerated execution of machine learning algorithms, provide enhanced processing capabilities for the disclosure, in particular the disclosed models. In exemplary embodiments, the models were executed on a computing system comprising a Linux-based operating environment, Intel^{®} Xeon^{®} multi-core central processing units (CPUs), and a NVIDIA^{®} GeForce^{®} RTX-series GPU. The use of such parallel processing or neuronal network processing units enables a significant reduction in computational latency and an improvement in throughput for the training and inference stages of the disclosed models. Significantly, the disclosed architecture is inherently suited for implementation by parallel processing or neuronal network processing units.

Consequently, the invention leverages the architectural advantages of parallel processing to achieve enhanced computational efficiency, scalability, and responsiveness, thereby addressing the technical problem of optimizing resource utilization in high-dimensional machine learning tasks.

In certain embodiments, the hardware-based computer processor is configured to execute software, firmware, or other executable instructions designed to implement the features, methods, or systems disclosed herein. These embodiments may be implemented as standalone devices, as part of a distributed system, or within a cloud computing environment.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

### References

[AAS23] ANDRIENKO N., ANDRIENKO G., SHIRATO G.: Episodes and topics in multivariate temporal data. Computer Graphics Forum 42, 6 (Aug. 2023). URL: http://dx.doi.org/10.1111/cgf. 14926, doi:10.1111/cgf.14926.
[BBC*24] BERNARD J., BARTH C.-M., CUBA E., MEIER A., PEIRIS Y., SHNEIDERMAN B.: Ivesa - visual analysis of time-stamped event sequences. IEEE Transactions on Visualization and Computer Graphics (2024), 1-18. URL: http://dx.doi.org/10.1109/tvcg. 2024.3382760, doi:10.1109/tvcg.2024.3382760.
[CLG*08] CHANG R., LEE A., GHONIEM M., KOSARA R., RIBARSKY W., YANG J., SUMA E., ZIEMKIEWICZ C., KERN D., SUDJIANTO A.: Scalable and interactive visual analysis of financial wire transactions for fraud detection. Information Visualization 7, 1 (Feb. 2008), 63-76. URL: http://dx.doi.org/10.1057/palgrave.ivs. 9500172, doi:10.1057/palgrave.ivs.9500172.
[CSL*16] CAO N., SHI C., LIN S., LU J., LIN Y.-R., LIN C.-Y.: Targetvue: Visual analysis of anomalous user behaviors in online communication systems. IEEE Transactions on Visualization and Computer Graphics 22, 1 (Jan. 2016), 280-289. URL: http://dx.doi.org/ 10.1109/TVCG.2015.2467196, doi:10.1109/tvcg.2015. 2467196.
[DXC*24] DIAS CANTAREIRA G., XING Y., COLE N., BORGO R., ABDUL-RAHMAN A.: Interactive hierarchical timeline for collaborative text negotiation in historical records. IEEE Transactions on Visualization and Computer Graphics (Feb. 2024). URL: https://ieeexplore. ieee.org/document/10517653.
[FCA*24] FELICIANO B., COSTA R., ALVES J., LIÉBANA J., DUARTE D., BIZARRO P.: ""Show Me What's Wrong!"": Combining charts and text to guide data analysis, 2024. URL: https://arxiv.org/abs/ 2410.00727, doi:10.48550/ARXIV.2410.00727.
[Fed24] FEDERAL TRADE COMMISSION: Consumer Sentinel Network Data Book 2023, February 2024. URL: https://www.ftc.gov/system/files/ftc_gov/pdf/ CSN-Annual-Data-Book-2023.pdf.
[FVS*23] FIRAT E. E., VYTLA D., SINGH N. V., JIANG Z., LARAMEE R.: Moneyvis: Open bank transaction data for visualization and beyond. URL: https://diglib.eg.org/handle/10.2312/ evs20231052, doi: 10.2312/EVS.20231052.
[KBK11] KRSTAJIC M., BERTINI E., KEIM D.: Cloudlines: Compact display of event episodes in multiple time-series. IEEE Transactions on Visualization and Computer Graphics 17, 12 (Dec. 2011), 2432-2439 URL: http://dx.doi.org/10.1109/TVCG.2011.179, doi: 10.1109/tvcg.2011.179.
[KDC*19] KAWASE R., DIANA F., CZELADKA M., SCHÜLER M., FAUST M.: Internet fraud: The case of account takeover in online marketplace. In Proceedings of the 30th ACM Conference on Hypertext and Social Media (Sept. 2019), HT'19, ACM, p. 181-190. URL: http://dx.doi.org/10.11 45/3342220. 3343651, doi:10.1145/3342220.3343651.
[LGS*22] LIU C., GAO Y., SUN L., FENG J., YANG H., AO X.: User behavior pre-training for online fraud detection. In Proceedings of the 28th ACM SIGKDD Conference on Knowledge Discovery and Data Mining (Aug. 2022), KDD '22, ACM, p. 3357-3365. URL: http://dx.doi.org/10.1145/353 4678. 3539126, doi:10.1145/3534678.3539126.
[LGZ*20] LIU G., GUO J., ZUO Y., WU J., GUO R.-Y.: Fraud detection via behavioral sequence embedding. Knowledge and Information Systems 62, 7 (Jan. 2020), 2685-2708. URL: http://dx. doi.org/10.1007/s10115-019-01433-3, doi:10.1007/ s10115-019-01433-3.
[MXC*19] MU X., XU K., CHEN Q., DU F., WANG Y., QU H.: Moocad: Visual analysis of anomalous learning activities in massive open online courses. EuroVis 2019 - Short Papers (2019). URL: https://diglib.eg.org/handle/10.2312/evs20191176, doi:10.2312/EVS.20191176.
[NHC*20] NGUYEN P. H., HENKIN R., CHEN S., ANDRIENKO N., ANDRIENKO G., THONNARD O., TURKAY C.: Vasabi: Hierarchical user profiles for interactive visual user behaviour analytics. IEEE Transactions on Visualization and Computer Graphics 26, 1 (Jan. 2020), 77-86. URL: http:// dx.doi. org/ 10.1109/TVCG.2019.2934609, doi:10.1109/tvcg.2019.2934609.
[NSH*18] NIEDERER C., STITZ H., HOURIEH R., GRASSINGER F., AIGNER W., STREIT M.: Taco: Visualizing changes in tables over time. IEEE Transactions on Visualization and Computer Graphics 24, 1 (Jan. 2018), 677-686. URL: http://dx.doi.org/10.1109/TVCG.2017.2745298, doi: 10.1109/tvcg.2017.2745298.
[PMC*22] PALMEIRO J., MALVEIRO B., COSTA R., POLIDO D., MOREIRA R., BIZARRO P.: Data+shift: Supporting visual investigation of data distribution shifts by data scientists. URL: https://diglib.eg.org/handle/10.2312/evs20221097, doi:10.2312/EVS.20221097.
[SLT*20] SHI Y., LIU Y., TONG H., HE J., YAN G., CAO N.: Visual analytics of anomalous user behaviors: A survey. IEEE Transactions on Big Data (2020). URL: http://dx.doi.org/10.1109/TBDA TA.2020.2964169, doi:10.1109/tbdata.2020.2964169.
[SMPM21] SILVA P., MAÇÃS C., POLISCIUC E., MACHADO P.: Visualisation tool to support fraud detection. In 2021 25th International Conference Information Visualisation (IV) (Jul. 2021), IEEE, p. 77-87 URL: http://dx.doi.org/10.1109/IV53921.2021.00022, doi: 10.1109/iv53921.2021.000 22.
[vSBS94] VAN SOMEREN M., BARNARD Y., SANDBERG J.: The think aloud method: a practical approach to modelling cognitive processes. Academic Press, 1994.
[ZCW*14] ZHAO J., CAO N., WEN Z., SONG Y., LIN Y.-R., COLLINS C.: #fluxflow: Visual analysis of anomalous information spreading on social media. IEEE Transactions on Visualization and Computer Graphics 20, 12 (Dec. 2014), 1773-1782. URL: http://dx.doi.org/10.1109/TVCG.2014 .2346922, doi:10.1109/tvcg.2014.2346922.
[ZWW*23] ZHOU J., WANG X., WANG J., YE H., WANG H., ZHOU Z., HAN D., YING H., WU J., CHEN W.: Fraudauditor: A visual analytics approach for collusive fraud in health insurance. URL: https://arxiv.org/abs/2303.13491, doi:10.48550/ARXIV.2303.13491.

## Claims

1. Computer-implemented method for monitoring a computer system for account and/or session security attacks (01), wherein the computer system provides session logins to a plurality of user devices using a plurality of user accounts, wherein the method comprises:
displaying multidimensional security data from said computer system, said multidimensional security data comprising a plurality of dimensions comprising a time dimension, wherein the time dimension is partitioned in time units; and
the method is **characterized by:**
displaying a plurality of device heatmaps (11) for each time unit (16, 20), wherein each device heatmap (20) corresponds to a device, wherein each device heatmap (20) is encoded as a function of the number of session logins for each device;
displaying a plurality of account heatmaps (13) for each time unit (16, 20), wherein each account heatmap (13) corresponds to a characteristic of the user accounts, wherein each account heatmap (13) is encoded as a function of a change occurring, or not, to one characteristic of the one or more user accounts of a plurality of user accounts.

2. Method according to the previous claim wherein each account heatmap (13) is encoded as a function of a change occurring, or not, to one characteristic of the one or more user accounts and also encoded as a function of the one characteristic of the one or more user accounts having been marked as restricted.

3. Method according to any of the previous claims wherein said heatmaps (13) for a same time unit are stacked perpendicularly to the time dimension.

4. Method according to any of the previous claims further comprising displaying a time window selector (18), receiving user interaction from said time window selector (18) and updating displayed heatmaps with the selected time window (18), in particular the time window selector (18) includes an adjustable time dimension granularity, further in particular an automatically adjustable time dimension granularity as a function of the selected time window (18), further in particular automatically adjustable time dimension granularity as a function of the selected time window (18) duration.

5. Method according to any of the previous claims further comprising displaying a horizontal bar chart (19) aligned with time dimension, displaying a session amount per time dimension unit.

6. Method according to any of the previous claims further comprising displaying said plurality of device heatmaps (11) arranged parallel to the time dimension, each device heatmap (11) aligned with a time dimension unit, displaying number of logins for all the user devices.

7. Method according to any of the previous claims further comprising detecting a user hover point over any part of a time unit partition and high-lighting the hovered time unit partition (16).

8. Method according to any of the previous claims further comprising detecting a user hover point over any part of a time unit partition (31) and displaying a hovering pop-up (30) comprising data about the hovered time unit partition (31).

9. Method according to any of the previous claims further comprising an aggregated device heatmap (10), wherein the aggregated device heatmap (10) is encoded as a function of the number of session logins for a plurality of device characteristics, wherein the plurality of device characteristics is an aggregation of each device characteristic for each of the plurality of device heatmaps (11).

10. Method according to any of the previous claims further comprising an aggregated account heatmap (12), wherein the aggregated account heatmap is encoded as a function of an aggregation of characteristics of the user accounts, wherein the aggregated account heatmap (12) is encoded as a function of a change occurring, or not, to one or more characteristics of the user accounts.

11. Method according to any of the previous claims further comprises displaying an indicator (11) representing an added device, wherein the indicator is placed perpendicularly to the time dimension and adjacent to the device heatmap for a time unit where the device has been added.

12. Method according to any of the previous claims comprising detecting a user input, in particular a user click, at one time unit of one heatmap and, if detected, highlighting the heatmaps of the corresponding time unit (16).

13. Method according to the previous claim comprising detecting a user hover point over any of the highlighted time unit heatmaps (16) and, if detected, displaying a hovering pop-up (13) comprising data about the hovered time unit (31); in particular comprising detecting a user hover point over any of the highlighted time unit heatmaps (31) of a device characteristic heatmap (12, 13) and, if detected, displaying a hovering pop-up (13) comprising a labelled value for the corresponding hovered device characteristic.

14. Non-transitory computer-readable medium comprising computer program instructions for implementing a method for providing a user interface for monitoring a computer system for account take-over, which when executed by a computer processor, cause the processor to carry out the method of any of the claims 1-13.

15. Computer system for providing a user interface for monitoring a computer system for account take-over, wherein the computer system provides session logins to a plurality of user devices using a plurality of user accounts, arranged for carrying out the method of any of the claims 1-13.

## Patentansprüche

1. Computerimplementiertes Verfahren zur Überwachung eines Computersystems auf Konto- und/oder Sitzungssicherheitsangriffe (01), wobei das Computersystem einer Vielzahl von Benutzergeräten unter Verwendung einer Vielzahl von Benutzerkonten Sitzungsanmeldungen bereitstellt, wobei das Verfahren umfasst:
Anzeigen mehrdimensionaler Sicherheitsdaten des genannten Computersystems, wobei die genannten mehrdimensionalen Sicherheitsdaten eine Vielzahl von Dimensionen umfassen, darunter eine Zeitdimension, wobei die Zeitdimension in Zeiteinheiten unterteilt ist; und
das Verfahren durch Folgendes **gekennzeichnet ist:**
Anzeigen einer Vielzahl von Geräte-Heatmaps (11) für jede Zeiteinheit (16, 20), wobei jede Geräte-Heatmap (20) einem Gerät entspricht, wobei jede Geräte-Heatmap (20) in Abhängigkeit von der Anzahl der Sitzungsanmeldungen für das jeweilige Gerät kodiert ist;
Anzeigen einer Vielzahl von Konto-Heatmaps (13) für jede Zeiteinheit (16, 20), wobei jede Konto-Heatmap (13) einem Merkmal der Benutzerkonten entspricht und wobei jede Konto-Heatmap (13) in Abhängigkeit davon codiert ist, ob bei diesem Merkmal eines oder mehrerer Benutzerkonten aus der Vielzahl von Benutzerkonten eine Änderung auftritt oder nicht.

2. Verfahren nach dem vorangehenden Anspruch, wobei jede Konto-Heatmap (13) als Funktion davon kodiert wird, ob bei einem Merkmal des einen oder der mehreren Benutzerkonten eine Änderung auftritt oder nicht, sowie als Funktion davon, dass das eine Merkmal des einen oder der mehreren Benutzerkonten als eingeschränkt markiert wurde.

3. Verfahren nach einem der vorangehenden Ansprüche, wobei die genannten Heatmaps (13) für dieselbe Zeiteinheit senkrecht zur Zeitdimension gestapelt sind.

4. Verfahren nach einem der vorangehenden Ansprüche, ferner umfassend das Anzeigen eines Auswahlelements für ein Zeitfenster (18), das Empfangen einer Benutzerinteraktion von dem Auswahlelement für ein Zeitfenster (18) und das Aktualisieren der angezeigten Heatmaps mit dem ausgewählten Zeitfenster (18), wobei das Auswahlelement für ein Zeitfenster (18) insbesondere eine einstellbare Granularität der Zeitdimension umfasst, ferner insbesondere eine als Funktion des ausgewählten Zeitfensters (18) automatisch einstellbare Granularität der Zeitdimension und ferner insbesondere eine als Funktion der Dauer des ausgewählten Zeitfensters (18) automatisch einstellbare Granularität der Zeitdimension.

5. Verfahren nach einem der vorangehenden Ansprüche, ferner umfassend das Anzeigen eines horizontalen, entlang der Zeitdimension ausgerichteten Balkendiagramms (19), das eine Anzahl von Sitzungen pro Einheit der Zeitdimension anzeigt.

6. Verfahren nach einem der vorangehenden Ansprüche, ferner umfassend das Anzeigen der Vielzahl von Geräte-Heatmaps (11), die parallel zur Zeitdimension angeordnet sind, wobei jede Geräte-Heatmap (11) jeweils an einer Einheit der Zeitdimension ausgerichtet ist und eine Anzahl von Anmeldungen für alle Benutzergeräte anzeigt.

7. Verfahren nach einem der vorangehenden Ansprüche, ferner umfassend das Erfassen einer Zeigerposition eines Benutzers über einem beliebigen Teil einer Zeiteinheitspartition und das Hervorheben der Zeiteinheitspartition (16), über der sich der Zeiger befindet.

8. Verfahren nach einem der vorangehenden Ansprüche, ferner umfassend das Erfassen einer Zeigerposition eines Benutzers über einem beliebigen Teil einer Zeiteinheitspartition (31) und das Anzeigen eines Popup-Fensters (30), das Daten über die Zeiteinheitspartition (31) enthält, über der sich der Zeiger befindet.

9. Verfahren nach einem der vorangehenden Ansprüche, ferner umfassend eine aggregierte Geräte-Heatmap (10), wobei die aggregierte Geräte-Heatmap (10) als Funktion der Anzahl von Sitzungsanmeldungen für eine Vielzahl von Gerätemerkmalen kodiert ist, wobei die Vielzahl von Gerätemerkmalen eine Aggregation der jeweiligen Gerätemerkmale jeder der Vielzahl von Geräte-Heatmaps (11) ist.

10. Verfahren nach einem der vorangehenden Ansprüche, ferner umfassend eine aggregierte Konto-Heatmap (12), wobei die aggregierte Konto-Heatmap als Funktion einer Aggregation von Merkmalen der Benutzerkonten kodiert ist, wobei die aggregierte Konto-Heatmap (12) als Funktion des Auftretens oder Nichtauftretens einer Änderung eines oder mehrerer Merkmale der Benutzerkonten kodiert ist.

11. Verfahren nach einem der vorangehenden Ansprüche, ferner umfassend das Anzeigen einer Markierung (11), die ein hinzugefügtes Gerät darstellt, wobei die Markierung senkrecht zur Zeitdimension und neben der Geräte-Heatmap für eine Zeiteinheit platziert wird, in der das Gerät hinzugefügt wurde.

12. Verfahren nach einem der vorangehenden Ansprüche, umfassend das Erfassen einer Benutzereingabe, insbesondere eines Klicks eines Benutzers, an einer Zeiteinheit einer Heatmap und, falls erfasst, das Hervorheben der Heatmaps der entsprechenden Zeiteinheit (16).

13. Verfahren nach dem vorangehenden Anspruch, umfassend das Erfassen einer Zeigerposition eines Benutzers über einer der hervorgehobenen Zeiteinheiten-Heatmaps (16) und, falls erfasst, das Anzeigen eines Pop-up-Fensters (13), das Daten über die Zeiteinheit (31) enthält, über der sich der Zeiger befindet; insbesondere umfassend das Erfassen einer Zeigerposition eines Benutzers über einer der hervorgehobenen Zeiteinheiten-Heatmaps (31) einer Gerätemerkmal-Heatmap (12, 13) und, falls erfasst, das Anzeigen eines Pop-up-Fensters (13), das einen beschrifteten Wert für das entsprechende Gerätemerkmal enthält, über dem sich der Zeiger befindet.

14. Nichtflüchtiges computerlesbares Medium, umfassend Computerprogrammanweisungen zum Implementieren eines Verfahrens zum Bereitstellen einer Benutzerschnittstelle zur Überwachung eines Computersystems für die Übernahme eines Benutzerkontos, wobei die Computerprogrammanweisungen, wenn sie von einem Computerprozessor ausgeführt werden, den Prozessor veranlassen, das Verfahren nach einem der Ansprüche 1-13 durchzuführen.

15. Computersystem zur Bereitstellung einer Benutzeroberfläche zur Überwachung eines Computersystems auf Kontoübernahmen, wobei das Computersystem einer Vielzahl von Benutzergeräten unter Verwendung einer Vielzahl von Benutzerkonten Sitzungsanmeldungen bereitstellt und zur Durchführung des Verfahrens nach einem der Ansprüche 1-13 eingerichtet ist.

## Revendications

1. Procédé mis en œuvre par ordinateur pour surveiller un système informatique pour des attaques de sécurité de compte et/ou de session (01), dans lequel le système informatique fournit des ouvertures de session à une pluralité de dispositifs d'utilisateur utilisant une pluralité de comptes d'utilisateur, dans lequel le procédé comprend :
afficher des données de sécurité multidimensionnelles à partir dudit système informatique, lesdites données de sécurité multidimensionnelles comprenant une pluralité de dimensions comprenant une dimension temporelle, dans laquelle la dimension temporelle est divisée en unités temporelles ; et
le procédé est **caractérisé par** les éléments suivants :
afficher une pluralité de cartes thermiques de dispositif (11) pour chaque unité temporelle (16, 20), dans laquelle chaque carte thermique de dispositif (20) correspond à un dispositif, dans lequel chaque carte thermique de dispositif (20) est codée en fonction du nombre d'ouvertures de session pour chaque dispositif ;
afficher une pluralité de cartes thermiques de compte (13) pour chaque unité temporelle (16, 20), dans laquelle chaque carte thermique de compte (13) correspond à une caractéristique des comptes d'utilisateur, dans lequel chaque carte thermique de compte (13) est codée en fonction d'un changement qui a lieu, ou pas, dans une caractéristique du ou des comptes d'utilisateur d'une pluralité de comptes d'utilisateur.

2. Procédé selon la revendication précédente dans lequel chaque carte thermique de compte (13) est codée en fonction d'un changement ayant lieu, ou pas, dans une caractéristique d'un ou de plusieurs comptes d'utilisateur et également codée en fonction de la caractéristique du ou des comptes d'utilisateur ayant été marqués comme restreints.

3. Procédé selon l'une quelconque des revendications précédentes dans lequel lesdites cartes thermiques (13) pour une même unité temporelle sont empilées perpendiculairement à la dimension temporelle.

4. Procédé selon l'une quelconque des revendications précédentes comprenant également l'affichage d'un sélectionneur de fenêtre temporelle (18), la réception d'une interaction d'utilisateur à partir dudit sélectionneur de fenêtre temporelle (18) et la mise à jour des cartes thermiques affichées avec la fenêtre temporelle sélectionnée (18), le sélectionneur de fenêtre temporelle (18) incluant particulièrement une granularité de la dimension temporelle ajustable, plus particulièrement une granularité de la dimension temporelle ajustable automatiquement en fonction de la fenêtre temporelle sélectionnée (18), plus particulièrement une granularité de la dimension temporelle ajustable automatiquement en fonction de la durée de la fenêtre temporelle sélectionnée (18).

5. Procédé selon l'une quelconque des revendications précédentes comprenant également l'affichage d'un diagramme à barres horizontales (19) aligné avec la dimension temporelle, affichant un nombre de sessions par unité de dimension temporelle.

6. Procédé selon l'une quelconque des revendications précédentes comprenant également l'affichage de ladite pluralité de cartes thermiques de dispositif (11) disposée de manière parallèle à la dimension temporelle, chaque carte thermique de dispositif (11) étant alignée avec une unité de dimension temporelle, affichant un nombre d'ouvertures pour tous les dispositifs d'utilisateur.

7. Procédé selon l'une quelconque des revendications précédentes comprenant également la détection d'un point de passage du curseur de l'utilisateur au-dessus de n'importe quelle partie d'une subdivision d'unité de temps, et mettant en évidence la subdivision d'unité de temps sur laquelle le curseur est passé (16).

8. Procédé selon l'une quelconque des revendications précédentes comprenant également la détection d'un point de passage du curseur de l'utilisateur au-dessus de n'importe quelle partie d'une subdivision d'unité de temps (31) et l'affichage d'une fenêtre lors du passage du curseur (30) comprenant des données concernant la subdivision d'unité de temps sur laquelle le curseur est passé (31).

9. Procédé selon l'une quelconque des revendications précédentes comprenant également une carte thermique agrégée de dispositif (10), dans lequel la carte thermique agrégée de dispositif (10) est codée en fonction du nombre d'ouvertures de session pour une pluralité de caractéristiques de dispositif, dans lequel la pluralité de caractéristiques de dispositif est une agrégation de chaque caractéristique de dispositif pour chacune de la pluralité de cartes thermiques de dispositif (11).

10. Procédé selon l'une quelconque des revendications précédentes comprenant également une carte thermique agrégée de compte (12), dans lequel ladite carte thermique agrégée de compte est codée en fonction d'une agrégation de caractéristiques des comptes d'utilisateur, dans lequel la carte thermique agrégée de compte (12) est codée en fonction d'un changement ayant lieu, ou pas, dans une ou plusieurs caractéristiques des comptes d'utilisateur.

11. Procédé selon l'une quelconque des revendications précédentes comprenant également l'affichage d'un indicateur (11) représentant un dispositif ajouté, dans lequel l'indicateur est placé perpendiculairement à la dimension temporelle et de manière adjacente à la carte thermique de dispositif pour une unité temporelle où le dispositif a été ajouté.

12. Procédé selon l'une quelconque des revendications précédentes comprenant la détection d'une entrée d'utilisateur, en particulier un clic d'utilisateur, à une unité temporelle d'une carte thermique et, si détectée, mettre en évidence les cartes thermiques de l'unité temporelle correspondante (16).

13. Procédé selon la revendication précédente comprenant la détection d'un point de passage du curseur de l'utilisateur au-dessus des cartes thermiques d'unité temporelle mises en évidence (16) et, si détecté, l'affichage d'une fenêtre au passage du curseur (13) comprenant des données concernant l'unité temporelle de passage du curseur (31) ; en particulier comprenant la détection d'un point de passage de curseur au-dessus de l'une quelconque des cartes thermiques d'unité temporelle mises en évidence (31) d'une carte thermique de caractéristique de dispositif (12, 13) et, si détecté, afficher une fenêtre au passage du curseur (13) comprenant une valeur étiquetée pour la caractéristique de dispositif sur laquelle est passé le curseur correspondant.

14. Un moyen lisible par ordinateur non transitoire comprenant des instructions de logiciel informatique destinées à mettre en place un procédé destiné à fournir une interface d'utilisateur pour surveiller un système informatique pour la prise de contrôle de comptes, qui, lorsqu'il est exécuté par un processeur informatique, fait en sorte que le processeur exécute le procédé de l'une quelconque des revendications 1-13.

15. Système informatique de fourniture d'une interface d'utilisateur destiné à être utilisé pour surveiller un système informatique pour la prise de contrôle de comptes, dans lequel le système informatique fournit des ouvertures de session à une pluralité de dispositifs d'utilisateur utilisant une pluralité de comptes d'utilisateur, disposés de manière à exécuter le procédé de l'une quelconque des revendications 1-13.
